(19) **Europäisches Patentamt European Patent Office Office européen des brevets**

(11) **EP 4 489 185 A1**

(12) **EUROPEAN PATENT APPLICATION**
published in accordance with Art. 153(4) EPC

(43) Date of publication:
08.01.2025 Bulletin 2025/02

(21) Application number: 23891960.9

(22) Date of filing: 14.11.2023

(51) International Patent Classification (IPC):
$H01M\ 10/659^{(2014.01)}$ $\quad H01M\ 10/6551^{(2014.01)}$
$H01M\ 10/613^{(2014.01)}$ $\quad H01M\ 10/653^{(2014.01)}$
$H01M\ 50/682^{(2021.01)}$ $\quad H01M\ 50/204^{(2021.01)}$

(52) Cooperative Patent Classification (CPC):
H01M 10/613; H01M 10/653; H01M 10/6551;
H01M 10/659; H01M 50/204; H01M 50/682

(86) International application number:
PCT/KR2023/018218

(87) International publication number:
WO 2024/106893 (23.05.2024 Gazette 2024/21)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 17.11.2022 KR 20220154484

(71) Applicant: LG Energy Solution, Ltd.
Seoul 07335 (KR)

(72) Inventors:
• HWANG, Won Pill
  Daejeon 34122 (KR)
• LEE, Yong Ho
  Daejeon 34122 (KR)
• LEE, Jin Kyu
  Daejeon 34122 (KR)
• YOON, Doo Han
  Daejeon 34122 (KR)
• SON, Chang Keun
  Daejeon 34122 (KR)
• KIM, Sun Jae
  Daejeon 34122 (KR)

(74) Representative: Plasseraud IP
104 Rue de Richelieu
CS92104
75080 Paris Cedex 02 (FR)

(54) **SECONDARY BATTERY MODULE WITH IMPROVED MODULE INTERIOR TEMPERATURE STABILITY**

(57) A heat absorbing pack for a secondary battery module and a secondary battery module including the same are provided. The heat absorbing pack has a structure including a superabsorbent matrix impregnated with water inside a pouch, and a heat-dispersing structure is inserted between the superabsorbent matrix and the pouch. Accordingly, the heat absorbing pack can absorb a large amount of heat from the surroundings when heat is generated inside the module, and thus, when it is provided in a secondary battery module, it is possible to prevent a rapid change in the ambient temperature of the secondary battery. Furthermore, the superabsorbent matrix of the heat absorbing pack can be uniformly exposed to the heat energy of the surroundings to prevent damage to the heat absorbing pack due to heat generation inside the module.

[FIG. 2]

EP 4 489 185 A1

**Description**

[Technical Field]

This application claims the benefit of priority from Korean Patent Application No. 10-2022-0154484, filed on Nov. 17, 2022, the disclosure of which is incorporated herein by reference in its entirety.

Aspects of the present disclosure relate to a heat absorbing pack for a secondary battery module that can uniformly absorb heat energy when the temperature inside the secondary battery module increases so that the internal temperature change is not large, and to a secondary battery module having improved stability against temperature changes inside the module by including the same.

[Background Technology of the Invention]

In recent years, secondary batteries have been widely used in small devices such as portable electronics, as well as in medium and large devices such as battery packs or power storage in hybrid or electric vehicles.

A secondary battery typically includes an electrode assembly including a positive electrode, a negative electrode, a separator, an electrolyte, and a multilayer exterior material protecting them. These secondary batteries can be used in the form of a battery module mounted with a plurality of cells.

However, these secondary batteries can be sensitive to changes in ambient temperature, which can have a significant impact on their electrical performance and safety.

In one example, an electrode assembly provided in a secondary battery can generate heat during the charging and discharging process. This heat not only degrades the performance of the secondary battery cell, but also increases the temperature of the secondary battery cell itself, which can lead to explosion of the cell. An explosion of the cell can also cause high temperatures and pressures on other nearby secondary battery cells, leading to a cascade of secondary battery cell explosions.

In order to suppress heat transfer to neighboring cells during thermal runaway situations in secondary batteries, technologies have been developed for thermal runaway protection sheets. For example, cartridges containing thermally conductive additives have been developed in battery modules to improve heat transfer efficiency. However, this prior art is intended to cool the heat generated by the battery during operation, and therefore does not function in a thermal runaway situation such as a cell explosion. In another example, technologies have been developed that include a cooling member that absorbs heat generated inside the secondary battery module to reduce the ambient temperature. However, in practice, thermal runaway is often caused by the overheating of specific cells mounted in the module. In this case, the cooling member is not able to absorb the heat generated by the cell uniformly, which induces damage to the cooling member during the heat absorption process, and thus has the limitation of not being able to absorb enough internal heat.

Therefore, in a secondary battery module including a secondary battery, it is necessary to develop a technology that can effectively and uniformly absorb the ambient temperature to prevent the temperature inside the module from rising rapidly when the temperature inside the module, i.e., the ambient temperature of the secondary battery, is under high temperature/heating conditions that lead to thermal runaway of the battery.

The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section.

[Prior Art Document]

[Patent Document]

Korean Patent Publication No. 10-2015-0000725

[Description of the Invention]

[Technical Problem]

Accordingly, an object of the present disclosure, according to certain embodiments, is to provide a technology that can uniformly absorb heat generated inside a secondary battery module, thereby suppressing rapid temperature changes inside the module.

[Technical Solution]

According to certain aspects, in the interests of addressing the problems described above, in an exemplary embodiment, the present disclosure provides a heat absorbing pack for a secondary battery module including:

a superabsorbent matrix;
a heat-dispersing structure disposed on at least one side of the superabsorbent matrix; and
a pouch into which a superabsorbent matrix disposed with the heat-dispersing structure is inserted,
wherein the superabsorbent matrix is impregnated with water, and
the heat-dispersing structure includes a plurality of pinholes on an edge of one side of the heat-dispersing structure.

Here, the pouch includes a venting induction part at an edge of one side, and the heat-dispersing structure may be inserted such that the plurality of pinholes are disposed on the same side as the venting induction part.

In addition, the heat-dispersing structure may have an average thickness of 5 $\mu$m to 100 $\mu$m, and may include a metal having a thermal conductivity of greater than or equal to 50 kcal/°C.

Moreover, the superabsorbent matrix may be in the form of a superabsorbent polymer (SAP) or a superabsorbent fiber (SAF).

Furthermore, the superabsorbent matrix may include one or more resins selected from the group consisting of polyacrylic acid, polyacrylate, polyacrylate graft polymer, starch, cross-linked carboxymethylated cellulose, acrylic acid copolymer, hydrolyzed starch-acrylonitrile graft copolymer, starch-acrylic acid graft copolymer, saponified vinyl acetate-acrylic acid ester copolymer, hydrolyzed acrylonitrile copolymer, hydrolyzed acrylamide copolymer, ethylene-maleic anhydride copolymer, isobutylene-maleic anhydride copolymer, polyvinylsulfonic acid, polyvinylphosphonic acid, polyvinyl phosphoric acid, polyvinyl sulfonic acid, sulfonated polystyrene, polyvinylamine, polydialkylaminoalkyl (meth) acrylamide, polyethyleneimine, polyarylamine, polyallylguanidine, polydimethyldialylammonium hydroxide, quaternized polystyrene derivatives, guanidine-modified polystyrene, quaternized poly(meth)acrylamide, and polyvinylguanidine.

In addition, the superabsorbent matrix may further include a thermally conductive filler inside.

Such superabsorbent matrix may include 10 g/g to 500 g/g of water.

Furthermore, in an exemplary embodiment, the present disclosure provides a secondary battery module including:

a housing member;
a plurality of battery cells inserted within the housing member; and
a heat absorbing pack according to the present invention for absorbing heat generated by the plurality of battery cells.

Here, the plurality of battery cells may be arranged in n rows (where n≥2), in which case a heat absorbing pack may be disposed between the rows of arranged battery cells and/or disposed in a space between an outer surface of the rows and the housing member.

In addition, according to certain aspects, the heat absorbing pack may be inserted such that the surface of the heat absorbing pack is perpendicular to the bottom surface of the secondary battery module, and may be disposed such that the venting induction part of the heat absorbing pack is positioned at the upper part.

[Advantageous Effects]

A heat absorbing pack for a secondary battery module according to aspects of the present disclosure has a structure including a superabsorbent matrix impregnated with water inside a pouch, and a heat-dispersing structure provided with pinholes is inserted between the superabsorbent matrix and the pouch. Accordingly, the heat absorbing pack can absorb a large amount of heat from the surroundings when heat is generated inside the module, and thus, when it is provided in a secondary battery module, it is possible to prevent a rapid change in the ambient temperature of the secondary battery.

Furthermore, according to certain aspects, the heat absorbing pack has the advantage of having a good heat absorption efficiency because the heat absorbing pack includes a heat-dispersing structure having pinholes, so that a filtering effect on water vapor can be implemented when venting the heat absorbing pack, thereby increasing the latent heat of water vapor in the module.

Furthermore, according to certain aspects, the heat absorbing pack can prevent damage to the heat absorbing pack due to heat generation inside the module as the superabsorbent matrix may be uniformly exposed to ambient thermal energy by the heat-dispersing structure. Thus, the heat absorbing pack can perform more stable temperature control inside the module, which can improve the performance and stability of the secondary battery depending on the ambient temperature.

[Brief Description of the Drawings]

FIG. 1 is a perspective view illustrating the structure of a secondary battery module according to aspects of the present disclosure.
FIG. 2 is a perspective view illustrating the structure of a heat absorbing pack according to aspects of the present disclosure.
FIGS. 3 and 4 are perspective views illustrating the shape of the heat-dispersing structure and superabsorbent matrix embedded in the heat absorbing pack, according to aspects of the present disclosure.
FIG. 5 is a graph showing the temperature change over time by location of the heated surface and the rear surface, when one surface of the heat absorbing pack of Example 1 and Comparative Example 2 is heated with a torch, respectively.
FIG. 6 is a graph showing the temperature change over time by location of the rear surface, when one surface of the heat absorbing pack of Example 1 and Comparative Example 2 is heated with a torch, respectively.
FIG. 7 is an image of the inside of the heat absorbing pack of Example 1 disassembled after one surface is heated with a torch.
FIGS. 8 and 9 are images of the inside of the heat absorbing packs of Comparative Example 1 and Comparative Example 2, disassembled after one surface is heated with a torch.

[Best Mode for Carrying out the Invention]

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

The present disclosure is subject to various modifications and can have many embodiments, certain of which are described in detail below.

However, this is not intended to limit the present disclosure to any particular embodiment and is to be understood to include all modifications, equivalents, or substitutions that fall within the scope of the thought and technology of the present disclosure.

The terms "comprise" or "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but also a case in which a third part is interposed there between. In contrast, when a part of a layer, a film, a region or a plate is disposed "under" another part, this includes not only a case in which one part is disposed "directly under" another part, but also a case in which a third part is interposed there between. In addition, in this application, "on" may include not only a case of disposed on an upper part but also a case of disposed on a lower part.

Aspects of the present disclosure will be described in more detail below.

### Heat absorbing pack for secondary battery

In an exemplary embodiment, the present disclosure provides a heat absorbing pack for a secondary battery module including:

a superabsorbent matrix;
a heat-dispersing structure disposed on at least one side of the superabsorbent matrix; and
a pouch into which a superabsorbent matrix disposed with the heat-dispersing structure is inserted.

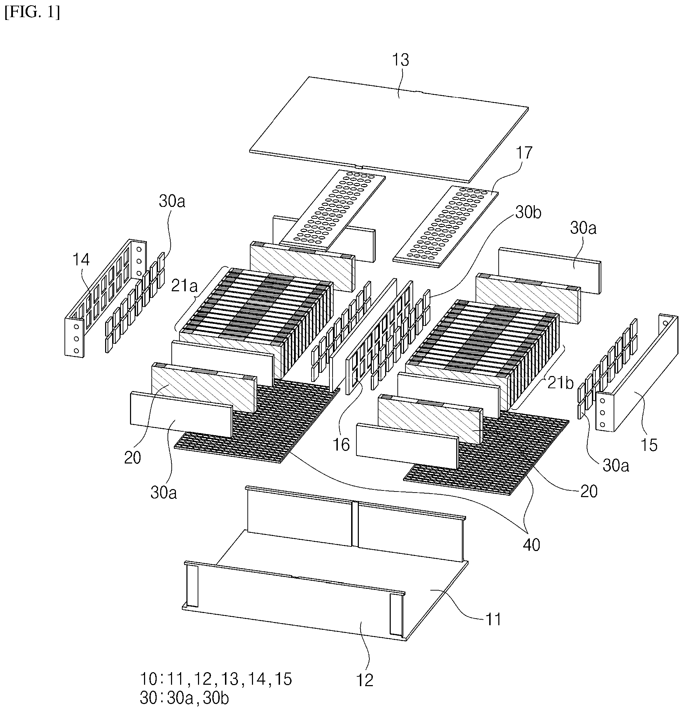

The heat absorbing packs 30, 30a, 30b according to aspects of the disclosure are parts that are inserted into the interior of the secondary battery module 1, as shown in FIG. 1, and have a structure in which a superabsorbent matrix impregnated with water is inserted into a pouch.

According to certain aspects, tn this case, the superabsorbent matrix is impregnated with water, which allows the superabsorbent matrix to absorb a large amount of thermal energy depending on the temperature conditions surrounding the heat absorbing pack, i.e., the internal temperature conditions of the secondary battery module in which the heat absorbing pack is mounted. Specifically, according to certain aspects, the water is impregnated inside the superabsorbent matrix, and then evaporated from the superabsorbent matrix by vaporization when the temperature outside the pouch increases. The water requires a large amount of heat to vaporize, and in order to meet this requirement, the water absorbs the heat around the pouch, thereby preventing the internal temperature from rising rapidly in the event of heat generation inside the module.

Here, the heat absorbing pack 30 according to the present disclosure may have a heat-dispersing structure disposed on at least one side of the superabsorbent matrix so that the water impregnated in the superabsorbent matrix can absorb heat uniformly. Specifically, the heat-dispersing structure may be disposed on each side in the form of a sheet so as to cover the surface of the superabsorbent matrix, or may be disposed in the form of a rectangular sheet so as to wrap around the superabsorbent matrix.

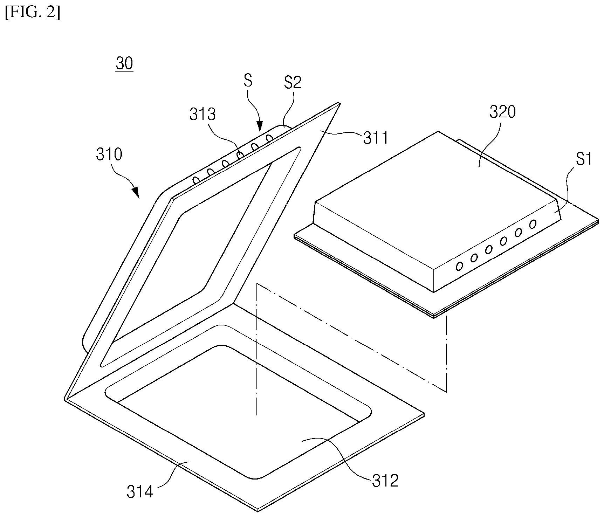

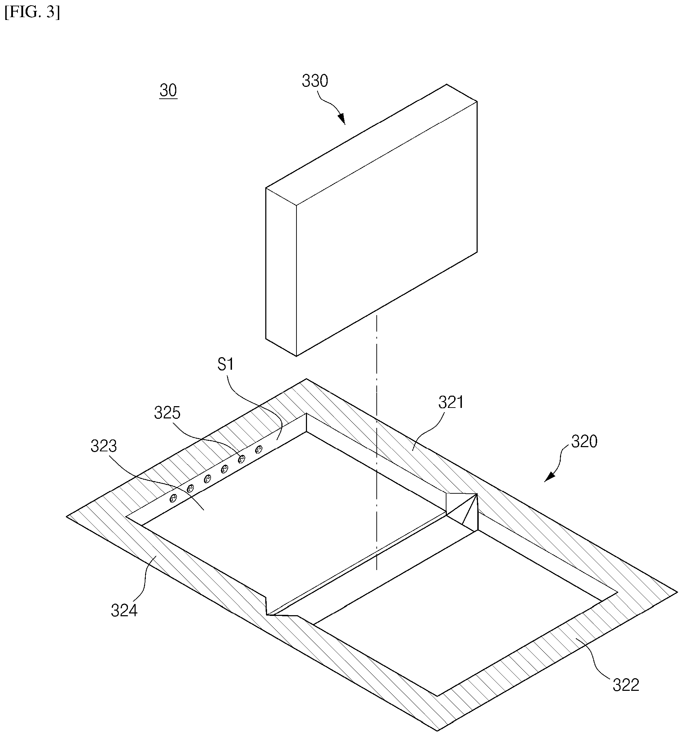

In one example, the heat-dispersing structure 320 may itself be in the form of a pouch or bag to surround all surfaces of the superabsorbent matrix 330, as shown in FIGS. 2 and 3. In this case, the heat-dispersing structure 320 may be inserted into the interior of the pouch 310, which is the exterior material of the heat absorbing pack 30, with the superabsorbent matrix 330 stored therein. In this case, the heat-dispersing structure 320 has the advantage of having a filtering effect on the vaporized water vapor upon venting of the heat absorbing pack 30, which can increase the latent heat of the water vapor in the module, thus having a good heat absorption efficiency.

The heat-dispersing structure 320 may include a plurality of pinholes 325 at one edge $S_1$ of the structure. The pinholes 325 may provide a pathway for vaporized water to pass through in the event of an increase in temperature outside the heat absorbing pack 30, while also acting as a filter to prevent components other than water vapor, such as components of the superabsorbent matrix 330 that are partially dissolved in water, from leaking out upon venting of the heat absorbing pack 30. By performing a filter function to prevent components other than water from being leaking to the outside when venting the heat absorbing pack 30, the pinholes 325 can increase the latent heat due to water vapor, thereby further increasing the heat absorbing performance of the heat absorbing pack.

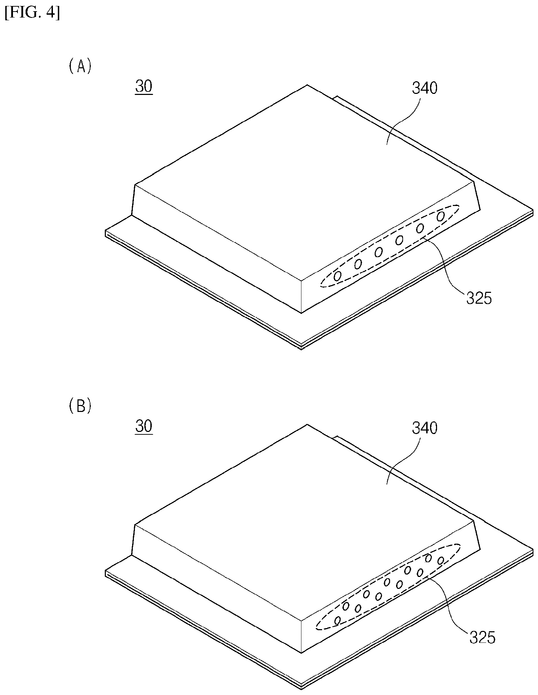

According to certain aspects, the pinholes 325 may be provided as a plurality of pinholes that are spaced apart at a predetermined distance from one another, to form a line on one edge $S_1$ of the heat-dispersing structure 320 as shown in FIG. 4. According to certain aspects, one or more lines of such pinholes 325 may be introduced, for example, one to five lines or two to four lines. By introducing the pinholes 325 in the heat-dispersing structure 320 in a plurality of lines as described above, aspects of the present disclosure can increase the discharge and filtering efficiency of water vapor upon venting of the heat absorbing pack 30.

As one example, when the heat-dispersing structure 320 has a pouch shape, pinholes 325 may be provided in the inserting part 323 where the superabsorbent matrix 330 is inserted, but may be provided at a position adjacent to the sealing part 324 that is coupled at the edge of the heat-dispersing structure 320 to form the interior of the pouch shape. In this case, the pinholes 325 may be provided in one row each on one edge of the first structure surface 321 and the second structure surface 322 of the pouch-shaped heat-dispersing structure 320, but may be located on both sides centered on the sealing part 324 after the heat-dispersing structure 320 is sealed.

Furthermore, the pinholes 325 may be arranged to be located on the same side S as the venting induction part 313 of the pouch 310 in which the heat-dispersing structure 320 is enclosed, as shown in FIG. 2. In this case, when venting the heat absorbing pack 30 after vaporization of the water impregnated in the superabsorbent matrix, a high venting pressure can be applied to the venting induction part 313 provided in the pouch 310, thereby further increasing the heat absorbing performance of the heat absorbing pack 30.

Furthermore, the pinholes 325 may be formed by punching one edge of the heat-dispersing structure. The punching may be applied in a manner conventionally applied in the art. Specifically, the pinholes 325 may be formed by perforating the pinhole-forming surface without forming any unevenness using a molding die for forming a circular hole. In addition, in some cases, the pinholes 325 may be formed by piercing one edge of the heat-dispersing structure 320 using a perforating means such as a heated needle to induce a flow of fluid from the inner side of the heat-dispersing structure 320 to the outer side of the heat-dispersing structure 320, such that the outer side of the heat-dispersing structure 320 may have a partially protruding shape around the pinhole 325 in the direction of the piercing. Further, in this case, the heat-dispersing structure 320 may be disposed such that the protruding part of the pinholes 325 are located along a pathway for water impregnated in the superabsorbent matrix 330 to vaporize and migrate to the venting induction part 313 of the pouch 310.

Furthermore, the heat-dispersing structure 320 may serve to uniformly transfer heat from outside the heat absorbing pack 30 to the superabsorbent matrix 330, thereby preventing the generated heat from concentrating on one portion of the heat absorbing pack 30 and damaging the heat absorbing pack.

To this end, according to certain aspects, the heat-dispersing structure 320 may include a metal sheet having a high thermal conductivity, wherein the metal sheet may include a metal having a thermal conductivity of 50 kcal/°C or more.

More specifically, the metal sheet may include a metal having a thermal conductivity of 70 kcal/°C or more, 80 kcal/°C or more, 90 kcal/°C or more, 100 kcal/°C or more, 50 kcal/°C to 400 kcal/°C, 70 kcal/°C to 370 kcal/°C, 70 kcal/°C to 150 kcal/°C, 100 kcal/°C to 370 kcal/°C, 150 kcal/°C to 200 kcal/°C, or 250 kcal/°C to 350 kcal/°C.

In one example, the metal sheet may include aluminum having a thermal conductivity of $196 \pm 3$ kcal/°C; tungsten having a thermal conductivity of $170 \pm 3$ kcal/°C; copper having a thermal conductivity of $320 \pm 3$ kcal/°C; nickel having a thermal conductivity of $77 \pm 3$ kcal/°C, and the like alone or in combination.

Further, while the heat-dispersing structure 320 can include a metal sheet with high thermal conductivity, the actual amount of heat transferred to the superabsorbent matrix 330 through the metal sheet may be highly dependent on the thickness of the metal sheet, as the heat must be distributed and transferred across the surface of the superabsorbent matrix 330. Therefore, according to certain aspects, the heat-dispersing structure 320 may have a predetermined thickness in order to transfer the heat around the pouch 310 (i.e., from outside the pouch) to the superabsorbent matrix 330 with high efficiency, and to disperse with more uniformity, and may satisfy a certain thickness condition in relation to the heat absorbing pack 30, considering the reduction in the energy density of the secondary battery module 1 due to the heat absorbing pack 30 and the heat conduction efficiency of the metal sheet itself included in the heat-dispersing structure.

As an example, the heat-dispersing structure 320 may have an average thickness of 5 $\mu$m to 100 $\mu$m, and may satisfy the following Equation 1, which represents a thickness ratio of the average thickness of the heat absorbing pack 30 to the average thickness of the heat-dispersing structure 320, within 10 to 500:

$$\text{Equation 1}$$

$$T_{pack}/T_{sheet}$$

in Equation 1,

$T_{pack}$ represents the average thickness (unit: $\mu$m) of a heat absorbing pack,
$T_{sheet}$ represents the average thickness of a metal sheet (unit: $\mu$m).

Specifically, Equation 1 is a ratio of the average thickness of the heat absorbing pack 30 to the average thickness of the heat-dispersing structure 320, and by satisfying the ratio within a predetermined range, according to certain aspects, the energy density reduction of the secondary battery module 1 can be prevented, while the thermal energy can be efficiently distributed and absorbed by the heat absorbing pack 30 without damaging the heat absorbing pack 30 in the event of an internal high temperature generation. To this end, according to certain aspects, the ratio of the average thickness of the heat absorbing pack 30 to the average thickness of the heat-dispersing structure 320 of the present disclosure may satisfy the Equation 1 with 10 to 500, and more specifically with 10 to 400; 10 to 300; 10 to 200; 10 to 100; 10 to 50; 100 to 300; or 100 to 200. By satisfying Equation 1 with 10 or more, according to certain aspects, the heat-dispersing structure can prevent the content of the superabsorbent matrix 330 from being reduced, resulting in a reduction in heat absorption efficiency, while by satisfying Equation 1 with 500 or less, the heat-dispersing structure can prevent the heat around the pouch 310 from not being uniformly distributed in the superabsorbent matrix 330 due to the thin thickness of the heat-dispersing structure 320, resulting in damage to the heat absorbing pack 30.

Furthermore, the heat-dispersing structure 320 may have an average thickness of 5 $\mu$m to 100 $\mu$m, and more specifically, may have an average thickness of 5 $\mu$m to 75 $\mu$m; 5 $\mu$m to 50 $\mu$m; 5 $\mu$m to 30 $\mu$m; 10 $\mu$m to 30 $\mu$m; or 15 $\mu$m to 25 $\mu$m.

By adjusting the average thickness of the heat-dispersing structure 320 to the above range, according to certain embodiments, aspects of the present disclosure can prevent the heat absorbing pack 30 from being damaged during heat absorption due to a thin thickness of less than 5 $\mu$m failing to uniformly transfer heat around the pouch 310 to the superabsorbent matrix 330, while preventing the thermal conductivity of the heat-dispersing structure 320 from being reduced due to an excessive thickness of more than 100 $\mu$m.

Furthermore, according to certain aspects, the superabsorbent matrix 330 may have the heat-dispersing structure 320 disposed on a surface directly in contact with the pouch 310 to meet a predetermined area ratio in order to absorb heat around the pouch 310 more uniformly.

Specifically, the heat-dispersing structure 320 may be disposed to cover at least 70% of the entire surface of the superabsorbent matrix 330, and more specifically, may be disposed to cover at least 75%, at least 80%, at least 85%, or at least 90% of the entire surface of the superabsorbent matrix 330. In some cases, the heat-dispersing structure 320 may be disposed on all surfaces of the superabsorbent matrix 330 such that there is 0% direct contact area between the superabsorbent matrix 330 and the pouch 310. By adjusting the percentage of the area that the heat-dispersing structure 320 covers the surface of the superabsorbent matrix 330 to the range above, the present disclosure may allow the heat surrounding the pouch 310 to be more uniformly distributed to the superabsorbent matrix 330.

Meanwhile, as mentioned above, according to certain aspects, the superabsorbent matrix 330 may have a fiber-like form, such as a cube or a nonwoven fabric, before being impregnated with water, and may have a slurry or suspension-like form after being impregnated with water, depending on the amount of water impregnated. As such, the waterimpregnated superabsorbent matrix 330 may have a separated form due to vaporization of the water impregnated therein when the heat absorbing pack 30 is exposed to high temperature conditions, and the pouch in which the superabsorbent matrix 330 is inserted may have an expanded form.

According to certain aspects, the superabsorbent matrix 330 may include a superabsorbent polymer (SAP) or a superabsorbent fiber (SAF) to absorb water with high efficiency. According to certain aspects, the superabsorbent polymer (SAP) and superabsorbent fiber (SAF) can be distinguished by their form. For example, the superabsorbent polymer (SAP) may have a powder form, while the superabsorbent fiber (SAF) may have a linear form.

Furthermore, the superabsorbent polymer (SAP) and superabsorbent fiber (SAF) may have the same or different components comprising them. Specifically, the superabsorbent matrix may include one or more selected from the group consisting of polyacrylic acid, polyacrylate, polyacrylate graft polymer, starch, cross-linked carboxymethylated cellulose, acrylic acid copolymer, hydrolyzed starch-acrylonitrile graft copolymer, starch-acrylic acid graft copolymer, saponified vinyl acetate-acrylic acid ester copolymer, hydrolyzed acrylonitrile copolymer, hydrolyzed acrylamide copolymer, ethylene-maleic anhydride copolymer, isobutylene-maleic anhydride copolymer, polyvinylsulfonic acid, polyvinylphosphonic acid, polyvinyl phosphoric acid, polyvinyl sulfonic acid, sulfonated polystyrene, polyvinylamine, polydialkylaminoalkyl (meth)acrylamide, polyethyleneimine, polyallylamine, polyallylguanidine, polydimethyldialylammonium hydroxide, quaternized polystyrene derivatives, guanidine-modified polystyrene, quaternized poly(meth)acrylamide, polyvinylguanidine, and a mixture thereof.

In one example, the superabsorbent matrix 330 can be one or more selected from the group consisting of, but not limited to, crosslinked polyacrylic acid salts, crosslinked polyacrylic acid, and crosslinked acrylic acid copolymers.

The type of acrylic acid copolymer used as the superabsorbent matrix 330 in the present disclosure is not particularly limited, but may preferably be a copolymer including one or more co-monomers selected from the group consisting of acrylic acid monomer, maleic acid, itaconic acid, acrylamide, 2-acrylamide-2-methylpropanesulfonic acid, 2-(meth)acryloylethanesulfonic acid, 2-hydroxyethyl(meth)acrylate, and styrenesulfonic acid.

According to certain aspects, the ingredients are substances having a reticular structure with hydrophilic functional groups, which can absorb water with high efficiency, so that the effect of the heat absorbing pack heat absorbing or self-heating can be implemented uniformly.

Furthermore, the superabsorbent matrix 330 may have an absorbency for water that satisfies a certain range. Specifically, the superabsorbent matrix may have an absorbency for water of 10 g/g to 500 g/g, more specifically 50 g/g to 200 g/g, but is not limited thereto. This means that each gram of the superabsorbent matrix can absorb from 10 g to 500 g of water, preferably from 50 g to 200 g of water. The higher the amount of water absorbed by the superabsorbent matrix 330, the better the duration of the cooling effect, but if the amount exceeds 500 g/g, the fluidity of the superabsorbent matrix 330 increases and it is difficult to maintain its shape, and thus effective cooling cannot be exerted. Furthermore, if the amount of water absorption of the superabsorbent matrix 330 is less than 10 g/g, the amount of heat absorbed by the superabsorbent matrix 330 depending on the temperature outside the pouch is significantly lower, which may be ineffective in suppressing rapid changes in the temperature inside the module.

In addition, the superabsorbent matrix 330 may further include a thermally conductive filler inside to better transfer heat to the water impregnated inside the matrix.

The thermally conductive filler can be used without limitation as long as it has good heat transfer properties, but more specifically, one or more selected from the group consisting of an inorganic oxide filler, a metal hydroxide filler, an inorganic carbide filler, a nitride filler, a metal filler, and a carbon filler may be used.

Here, examples of the inorganic oxide filler include aluminum oxide, magnesium oxide, zinc oxide, or silicon oxide; examples of the metal hydroxide filler include aluminum hydroxide or magnesium hydroxide; examples of the inorganic carbide filler include silicon carbide; examples of the nitride fillers include aluminum nitride, boron nitride, or silicon nitride; examples of the e metal fillers include silver, copper, zinc, iron, aluminum, nickel, tin, or alloys thereof; and examples of the carbon fillers include carbon or graphite, and the like.

Furthermore, the thermally conductive filler is not particularly limited in shape, but may have a spherical shape with a high specific surface area to effectively transfer heat within the superabsorbent matrix, or may be needle-like or fibrous shape to form a thermal network with neighboring thermally conductive fillers.

Furthermore, the pouch 310 may be adapted, without limitation, to be capable of transferring external heat to the internally inserted superabsorbent matrix 330. For example, the pouch 310 may include a metal layer, and may be provided with an inner resin layer including a cross-linked polyolefin-based resin on an inner surface of the metal layer, and an outer resin layer on an outer surface of the metal layer to protect the heat absorbing pack 30.

The metal layer may include, for example, an aluminum layer that can transfer heat from the outside of the heat absorbing pack 30 to the inside, while having a certain strength to resist external forces.

Furthermore, the inner resin layer may be located on the inner surface of the metal layer and may function to prevent the reaction of the metal layer of the pouch with water impregnated in the superabsorbent matrix 330. To this end, the inner resin layer may include a cross-linked polyolefin-based resin. The cross-linked polyolefin-based resin may have a low hygroscopicity, which may inhibit the invasion of water impregnated in the superabsorbent matrix, so that swelling or erosion of the inner resin layer may not occur thereby. Here, the polyolefin-based resin may have a crosslinking degree of 10 to 70%, and more particularly, it may have a crosslinking degree of 30 to 50%. Furthermore, the polyolefin-based resin may be one or more selected from the group consisting of polypropylene (PP) and polyethylene (PE), and the crosslinked polyolefin-based resin may specifically include a crosslinked polyethylene, a crosslinked polypropylene, or a mixture thereof, and more specifically, a crosslinked polypropylene.

Furthermore, according to certain aspects, the outer resin layer may be required to have excellent resistance to the external environment to protect the heat absorbing pack 30 from the outside, such as excellent tensile strength and weather resistance relative to the thickness, and may use, for example, a polyester-based resin such as polyethyleneterephthalate (PET), polybutyleneterephthalate (PBT), polyethylenenaphthalate (PEN), and the like, a polyolefin-based resin such as polyethylene (PE), polypropylene (PP), and the like, a polystyrene-based resin such as polystyrene, a polyvinyl chloride-based resin, a polyvinylidene chloride-based resin, and the like. These materials can be used alone or in a mixture of two or more, and additionally, ONy (stretched nylon film) can be used.

Furthermore, according to certain aspects, the pouch 310 includes a venting induction part 313 for discharging the vaporized water vapor to the outside, as the vaporization of the water impregnated in the superabsorbent matrix 330 by external heat generates a difference between the gas pressure inside the pouch and the gas pressure outside the pouch. To this end, the venting induction part 313 may be provided on one edge $S_2$ of the pouch 310 to facilitate the discharge of the water vapor, and more specifically may be provided adjacent to the pouch sealing part 314.

Furthermore, according to certain aspects, the venting induction part 313 does not discharge gas (i.e., water vapor) when there is no or a small pressure difference between the pressure inside the heat absorbing pack 30 and the pressure outside the heat absorbing pack 30; and when the inflow of external substances into the heat absorbing pack 30 is blocked, but when the pressure difference between the inside and outside of the heat absorbing pack 30 is greater than 0.1 atm, water vapor is discharged through the venting induction part 313 due to the air pressure difference. Subsequently, if the pressure difference between the inside and outside of the heat absorbing pack 30 becomes less than or equal to 0.1 atm as the discharge is accomplished to a certain extent, the process of returning to a state in which water vapor discharge is blocked may become reversible.

Further, the venting induction part 313 may be made of a laminated structure of a first layer with pores and a second layer without pores, wherein the first and second layers may be composed of the same material, including polytetrafluoroethylene (PTFE). Polytetrafluoroethylene (PTFE) has the advantage of being heat resistant and hydrophobic, making it suitable as a venting induction part material.

Furthermore, in the venting induction part 313, the first layer may have a structure formed with pores, while the second layer may have a structure without the pores. Specifically, the first layer may have an open pore structure with the inside and outside being connected, while the second layer may have a surface with curves on the surface but no pores, and since the second layer is made of PTFE, gas may escape through microscopic gaps formed between the polymers.

Furthermore, according to certain aspects, the outer resin layer, the metal layer, and the inner resin layer of the pouch 310 have a penetrated state at the site where the venting induction part 313 is disposed, and by disposing the venting induction part 313 at the site and pressing the edge of the venting induction part 313 at a high temperature, the venting induction part 313 can be stably attached to the inner surface of the pouch 310. More specifically, by disposing the venting induction part 313 at the penetration portion of the pouch 310 and pressing the edge of the venting induction part 313 at a high temperature, the inner resin layer of the pouch 310 may melt into the pores of the first layer of the venting induction part, and the venting induction part 313 may be stably attached to the inner surface of the pouch 310. Accordingly, gas (e.g., water vapor) formed inside the interior of the pouch 310 may pass through the first and second layers of the venting induction part 313 and be discharged to the outside. To this end, the penetration portion of the pouch 310 may have a smaller area than the area of the venting induction part 313.

Meanwhile, polytetrafluoroethylene (PTFE) has a melting point of 327 °C, which is different from the melting point of polypropylene (PP), which according to certain aspects is mainly used as the inner resin layer of the pouch, which is about 160 °C. Therefore, when the venting induction part 313 made of polytetrafluoroethylene (PTFE) is heated and pressurized to attach to the inner resin layer made of polypropylene (PP), the polypropylene (PP) may be damaged if the heating temperature is such that the polytetrafluoroethylene (PTFE) melts. On the other hand, if polypropylene (PP) is heated to a temperature that would melt but not damage the polypropylene (PP), the polytetrafluoroethylene (PTFE) will not melt, making it difficult to couple them together.

Therefore, aspects of the present disclosure use a structure in which the venting induction part 313 is attached to the pouch so that the pore-formed first layer contacts the inner resin layer of the pouch, and when the overlapping part of the pouch 310 and the venting induction part 313 are heated and pressurized to a high temperature in order to attach the venting induction part 313 to the pouch, a part of the inner resin layer is hardened to a state in which the inner resin layer is melted into the pore of the first layer, and a coupling is formed in which the inner resin layer is anchored with respect to the first layer.

Further, the heat absorbing pack 30 may satisfy a certain thickness condition in order to effectively control the changing temperature inside the secondary battery module 1. Specifically, the heat absorbing pack 30 may have a thickness of 0.1 mm to 50 mm, and more specifically, it may have a thickness of 0.1 mm to 30 mm; 0.1 mm to 15 mm; 0.1 mm to 10 mm; 1 mm to 20 mm; 5 mm to 10 mm; 10 mm to 20 mm; or 1 mm to 5 mm.

By adjusting the thickness of the heat absorbing pack 30 to the above range, aspects of the present disclosure realize that, in the case of less than 0.1 mm, an excessively thin thickness of the heat absorbing pack 30 may cause insufficient thermal energy entry and exit around the heat absorbing pack 30, resulting in a rapid change in the temperature inside the module, and in the case of more than 50 mm, the thickness of the battery module may increase, resulting in a significant reduction in energy density.

By having the above-described configuration, the heat absorbing pack 30 according to aspects of the present disclosure can not only absorb a large amount of heat from the surroundings when heat is generated inside the module, but can also supply the heat evenly to the superabsorbent matrix 330, thereby preventing damage to the heat absorbing pack 30 due to heat generated inside the module. Thus, when provided in a secondary battery module, it may be possible to prevent the ambient temperature of the secondary battery from changing rapidly, thereby improving the performance and stability of the secondary battery depending on the ambient temperature.

## Secondary battery module

Furthermore, in an exemplary embodiment, the present disclosure provides a secondary battery module including a secondary battery and a heat absorbing pack for the secondary battery according to the present disclosure described above.

FIG. 1 is a perspective view of the structure of a secondary battery module 1 according to aspects of the present disclosure, which will be described in more detail with reference to FIG. 1.

A secondary battery module 1 according to the disclosure includes a housing member 10; a plurality of battery cells 20 inserted within the housing member; and a heat absorbing pack 30 for absorbing heat generated by the plurality of battery cells.

The secondary battery module 1 according to the present disclosure includes a plurality of battery cells 20 and, together with these battery cells, the heat absorbing pack 30 of the present disclosure described above, which has the advantage of having good stability with respect to the temperature of the battery cells 20, as it is possible to prevent a rapid increase in the temperature inside the module.

Here, the housing member 10 serves as the body of a battery module in which a plurality of the secondary battery cells 20 are housed. Furthermore, the housing member 10 is a member in which a plurality of the battery cells 20 are housed, which protects the battery cells 20 while transmitting electrical energy generated by the battery cells 20 to the outside.

To this end, the housing member 10 may include a bottom member 11 and a side wall member 12 or the like. The bottom member 11 supports the plurality of battery cells 20, on which the plurality of battery cells 20 are seated. Further, a heat sink 40 may be disposed between the bottom member 11 and the battery cells 20, the heat sink 40 being configured to transfer heat generated by the battery cells 20 to the bottom member 11, and the bottom member 11 being configured to transfer heat received from the heat sink 40 to the outside for cooling.

Furthermore, the side wall member 12, forming a side part of the housing member 10, may also allow the heat generated by the battery cell 20 to be discharged to the outside.

The housing member 10 may further include a cover member 13 provided on upper end of the side wall member 12, configured to protect an upper end part of the battery cell 20. Further, between the cover member 13 and the upper end part of the battery cell 20, a gas venting member 17 may be included to allow gases generated from the battery cell 20 to be discharged to the outside during charging and discharging.

Furthermore, the housing member 10 may include a front member 14 and a rear member 15 adjacent to the side wall member 12, and thus configured to wrap around the side surfaces of the plurality of battery cells 20.

Further, the housing member 10 may further include additional configurations such as a busbar member (not shown) electrically connecting the battery cells 20 to the outside.

Meanwhile, the battery cell 20 may have any shape that can be used for a lithium secondary battery, and may have a shape including, but not limited to, prismatic, pouch-type, cylindrical, and the like. As one example, the battery cell 20 may be a prismatic or pouch-type lithium secondary battery.

Further, the battery cells 20 may be inserted within the housing member 10, but may be aligned and disposed in n rows (where n≥2) opposite the side wall members 12 of the housing member 10. Specifically, the battery cells 20 may be aligned and disposed in two or more rows, three or more rows, or two or four rows opposite the side wall members 12.

The aligned battery cells 20 may have heat absorbing packs 30 disposed at adjacent locations. In one example, the heat absorbing pack 30a may be disposed on the outer side surface of the aligned battery cells 20, i.e., in the space between the housing member 10 and the battery cells 20.

As another example, a heat absorbing pack 30b may be inserted between the battery cells 20. Specifically, the heat absorbing pack 30b may be disposed between individual battery cells 20 comprising a row, and in some cases, between a first row 21a and a second row 21b comprising aligned battery cells as shown in FIG. 1.

As such, by disposing the heat absorbing pack 30 in a location adjacent to the battery cell 20, if the battery cell 20 generates heat, the heat absorbing pack 30 can immediately absorb the heat, thereby preventing rapid temperature changes within the module.

Furthermore, the heat absorbing pack 30 may be arranged such that the venting induction part is exposed on the upper part of the module to facilitate venting of water vapor vaporized therein upon exposure to high temperatures. Specifically, the heat absorbing pack 30 may be inserted into the module such that its surface is perpendicular to the bottom surface of the module, i.e., the bottom member 11, wherein the venting induction part provided on one edge of the heat absorbing pack may be disposed adjacent to the upper part of the module, e.g., the cover member 13 and/or the gas venting member 17 of the module.

Hereinafter, the present disclosure will be described in more detail by way of examples and experimental examples.

However, the following examples and experimental examples are illustrative of the present disclosure, and the disclosure is not limited to the following examples.

## Example 1. Preparation of heat absorbing pack

A rectangular aluminum (Al) sheet was prepared as a heat-dispersing structure. The prepared aluminum sheet was folded in half at a point 1/2 way along the long axis longitudinal direction of the sheet, and two sides adjacent to the half-folded side among the three open sides of the folded aluminum sheet were sealed. Then, on the remaining unsealed side, two pinhole lines were formed with 10 pinholes along the edge to form a single line of pinholes. Then, a superabsorbent fiber was inserted into the inside of the sealed aluminum (Al) sheet, and water was injected to impregnate the superabsorbent fiber with water. At this time, 10 grams of water was impregnated per 1 gram of superabsorbent fiber (component: acrylic acid copolymer). The open side of the aluminum (Al) sheet was then sealed in such a way that a vacuum was created inside and a pinhole was located inside the sealing part (i.e., an unsealed area), and an aluminum bag (Al bag) was produced in which the superabsorbent fiber impregnated with water was stored inside the bag formed from the aluminum sheet.

Separately, an aluminum pouch with a width of 9 cm and a length of 12 cm was prepared including an aluminum layer, a polypropylene (PP) layer located on the outer side of the aluminum layer, and a polyethylene (PE) layer with a cross-linking degree of $40\pm2\%$ on the inner side of the aluminum layer. The aluminum bag (Al bag) prepared primarily was inserted into the prepared aluminum pouch, the inside of the pouch was changed to a vacuum state, and the opening of the pouch was sealed to prepare a heat absorbing pack.

The pouch was provided with a venting induction part at one edge, the venting induction part having a two-layer structure composed of polytetrafluoroethylene (PTFE), wherein the first layer had a pore-formed to have an open structure with the inside and outside connected, and the second layer had a structure with no pores formed, the second layer being disposed facing the inside of the pouch.

In addition, when the aluminum bag is inserted inside the pouch, the pinholes of the aluminum bag and the venting induction part of the pouch were located adjacent to each other by positioning them on the same side.

## Example 2. Preparation of heat absorbing pack

A pouch identical to the pouch used in Example 1 was prepared. Separately, two aluminum (Al) sheets with a width of 8.5 cm and a length of 11.5 cm were prepared as heat-dispersing structures, and inserted into the inside of the prepared pouch. Then, a superabsorbent fiber was inserted between the two aluminum (Al) sheets, and water was injected to impregnate the superabsorbent fiber with water. Here, 10 grams of water was impregnated per 1 gram of superabsorbent fiber (component: acrylic acid copolymer). Afterwards, the inside of the pouch was changed to a vacuum state and the opening of the pouch was sealed to prepare a heat absorbing pack.

In this case, the aluminum (Al) sheet was formed with two pinhole lines forming a line of 10 pinholes on one edge, the pinhole lines being disposed adjacent to each other by positioning them on the same side as the venting induction part of the pouch.

## Comparative Example 1. Preparation of heat absorbing pack

The heat absorbing pack was prepared by performing the same method as in Example 1, except that the rectangular aluminum (Al) sheet as a heat-dispersing structure was not used and the heat absorbing fibers were inserted directly inside the pouch.

## Comparative Example 2. Preparation of heat absorbing pack

The heat absorbing pack was prepared by performing the same method as in Example 1, except that no pinholes were provided in the aluminum bag, which was made using a rectangular aluminum (Al) sheet as the heat-dispersing structure.

## Experimental Example.

The effectiveness of the heat absorption by the heat absorbing pack according to the present disclosure was evaluated.

Specifically, each of the heat absorbing packs prepared in the Example and Comparative Examples was fixed vertically, and three temperature sensors were attached to both sides of the fixed heat absorbing pack. Here, the three temperature sensors on each side were positioned at the upper part, center, and lower part of the surface of the vertically fixed heat absorbing pack.

Then, the center of one side of the heat absorbing pack was heated for 10 minutes using a butane gas torch, and the temperature of the heated side (i.e., the heated side) and its rear side were measured during the heating, respectively.

In addition, once the torch heating was complete, the heat absorbing packs were cooled, and the cooled heat absorbing packs were disassembled to visually assess any damage to the superabsorbent fibers that were inserted into the pouch inside the heat absorbing pack.

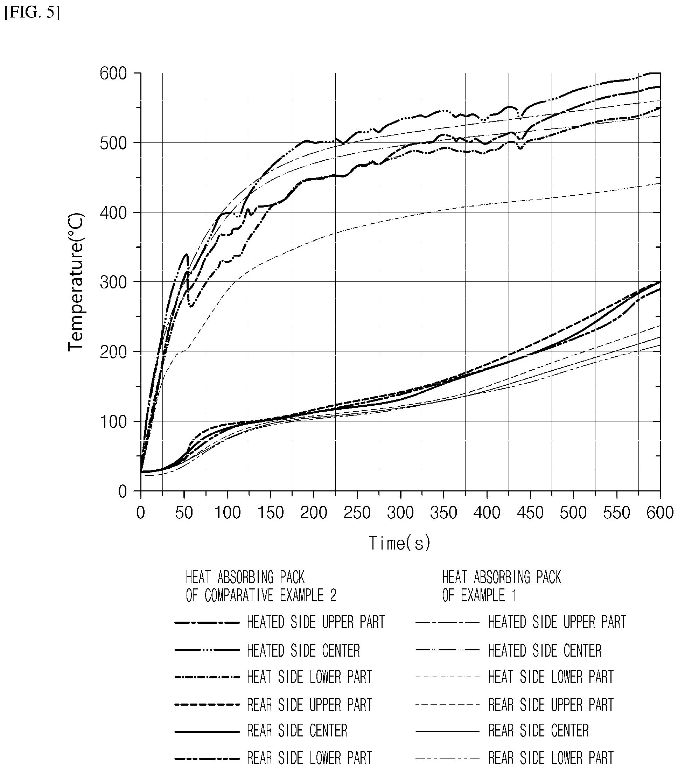

The results are shown in Table 1 below and FIGS. 5 through 9, where the damage of the superabsorbent fibers is indicated by ∘ for damaged and X for undamaged.

Table 1]

|  | Final temperature of rear side | | | Damage to superabsorbent fiber |
|---|---|---|---|---|
|  | Upper part | Center | Lower part |  |
| Example 1 | 260±1°C | 240±1°C | 210±1°C | X |
| Example 2 | 289±1°C | 275±1°C | 260±1°C | X |
| Comparative Example 1 | 365±1°C | 346±1°C | 311±1°C | ○ |
| Comparative Example 2 | 302±1°C | 295±1°C | 285±1°C | X |

As shown in Table 1 and FIGS. 5 through 9, it can be seen that the heat absorbing pack of the example according to aspects of the present disclosure stably suppresses the rapid temperature rise inside the battery module.

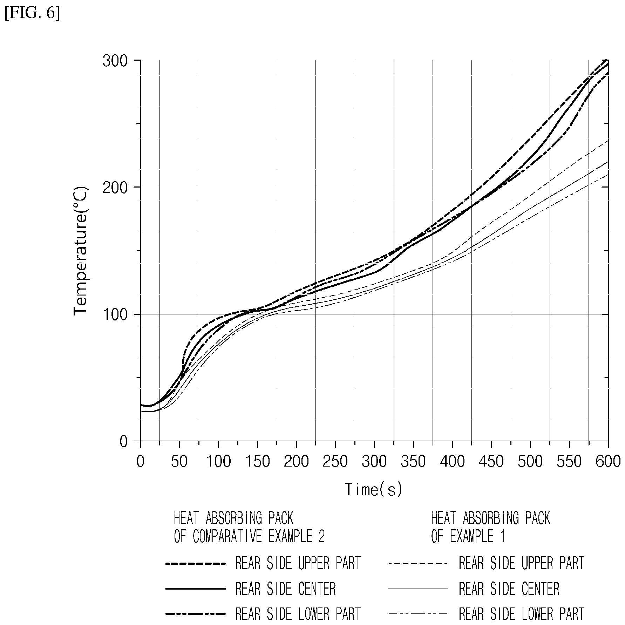

Specifically, referring to Table 1 and FIGS. 5 and 6, it can be seen that the heat absorbing pack of the example has the highest temperature at the center, which is directly heated by the torch, followed by the upper part and lower part, while the rear side has the highest temperature in the order of upper part>center>lower part. This indicates that the heat transferred to the rear side of the heat absorbing pack is reduced as it absorbs the energy required to vaporize and separate the water contained within the heat absorbing pack from the superabsorbent fibers.

Furthermore, it was found that the temperature of the heat absorbing pack of the example on the heated side and the rear side is generally lower than that of the heat absorbing pack of the comparative example. This means that the introduction of a heat-dispersing structure inside the pouch can better disperse external heat to the superabsorbent fibers, and the introduction of pinholes in the heat-dispersing structure can selectively release vaporized water vapor to the outside, further increasing the latent heat of water.

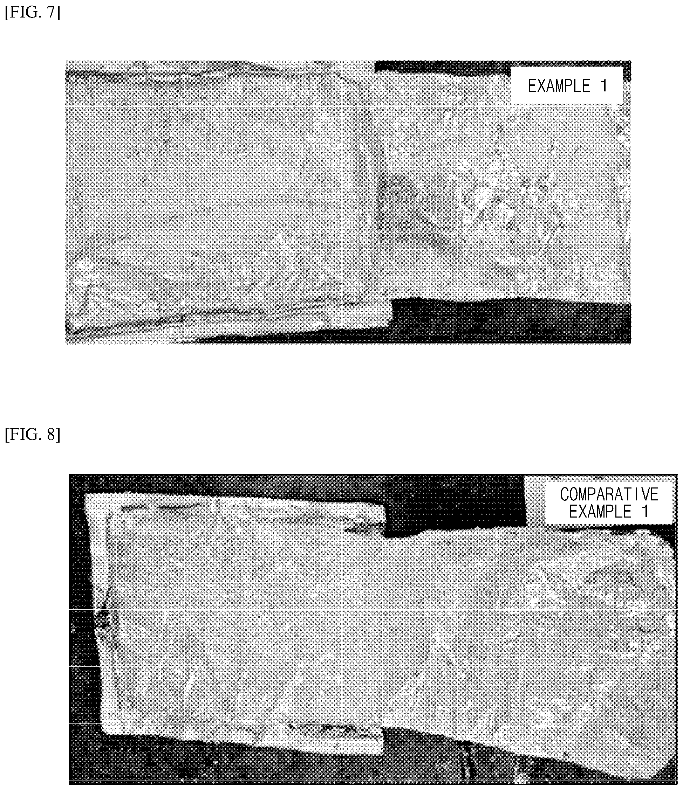

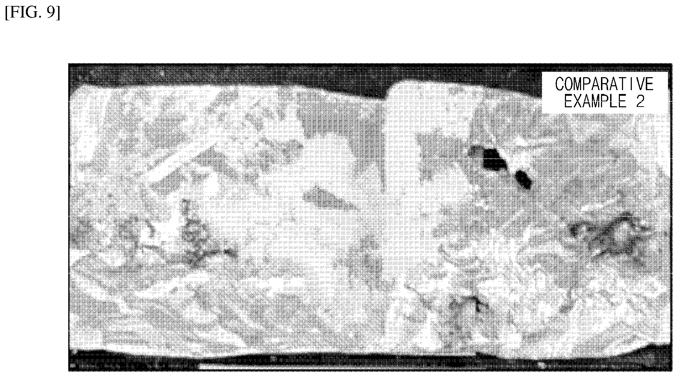

Furthermore, as shown in FIG. 7, it is confirmed that the heat absorbing pack of the example does not cause internal damage to the superabsorbent fiber inserted inside the pouch as the superabsorbent fiber absorbs the heat around the pouch uniformly. On the other hand, referring to FIGS. 8 and 9, it is found that the heat absorbing pack of Comparative Example 1 does not absorb enough heat energy inside the module because the heat-dispersing structure, i.e., the aluminum (Al) sheet, is not arranged between the pouch and the superabsorbent fiber, or does not meet the thickness condition of the present disclosure, and both the superabsorbent fiber and the pouch are damaged internally when absorbing heat, so that the heat absorption of the heat absorbing pack cannot be performed stably.

From these results, it can be seen that the heat absorbing pack according to aspects of the present disclosure can absorb a large amount of heat inside the module under high temperature conditions, thereby preventing the temperature inside the module from changing rapidly, and since the heat is absorbed uniformly inside the heat absorbing pack, damage to the heat absorbing pack during the heat absorption process can be prevented, thereby controlling the temperature inside the module more stably.

While the foregoing has been described with reference to preferred embodiments of the present disclosure, it may be understood by those skilled in the art or having ordinary knowledge of the art that various modifications and changes can be made to the disclosure without departing from the field of thought and technology described in the patent claims that will follow.

Thus, the technical scope of the present disclosure is not limited to what is described in the detailed description of the specification, but may be defined by the claims of the patent.

[Reference numerals]

| 1: | SECONDARY BATTERY MODULE | | |
|---|---|---|---|
| 10: | HOUSING MEMBER | 11: | BOTTOM MEMBER |
| 12: | SIDE WALL MEMBER | 13: | COVER MEMBER |
| 14: | FRONT MEMBER | 15: | REAR MEMBER |
| 16: | BULKHEAD MEMBER | 17: | GAS VENTING MEMBER |
| 20: | BATTERY CELL | 21: | ROW IN WHICH BATTERY CELLS ARE ALIGNED CELLS ARE ALIGNED |
| 21a: | FIRST ROW IN WHICH BATTERY | | |
| 21b: | SECOND ROW IN WHICH BATTERY CELLS ARE ALIGNED | | |
| 30: | HEAT ABSORBING PACK | | |
| 30a: | HEAT ABSORBING PACK DISPOSED ON THE OUTER SIDE OF THE BATTERY CELL | | |
| 30b: | HEAT ABSORBING PACK DISPOSED BETWEEN A PLURALITY OF ROWS IN WHICH BATTERY CELLS ARE ALIGNED | | |
| 40: | HEAT SINK | | |

**Claims**

1. A heat absorbing pack for a secondary battery module comprising:

   a superabsorbent matrix;
   a heat-dispersing structure disposed on at least one side of the superabsorbent matrix; and
   a pouch into which a superabsorbent matrix and the heat-dispersing structure are inserted,
   wherein the superabsorbent matrix is impregnated with water, and
   the heat-dispersing structure includes a plurality of pinholes on an edge of one side of the heat-dispersing structure.

2. The heat absorbing pack for the secondary battery module of claim 1, wherein the pouch includes a venting induction part at an edge of one side of the pouch, and
   the heat-dispersing structure is inserted such that the plurality of pinholes are disposed on the same side as the venting induction part.

3. The heat absorbing pack for the secondary battery module of claim 1, wherein the heat-dispersing structure has an average thickness of 5 $\mu$m to 100 $\mu$m.

4. The heat absorbing pack for the secondary battery module of claim 1, wherein the heat-dispersing structure includes a metal having a thermal conductivity of greater than or equal to 50 kcal/°C.

5. The heat absorbing pack for the secondary battery module of claim 1, wherein the superabsorbent matrix is a superabsorbent polymer (SAP) or a superabsorbent fiber (SAF).

6. The heat absorbing pack for the secondary battery module of claim 1, wherein the superabsorbent matrix includes one or more selected from the group consisting of polyacrylic acid, polyacrylate, polyacrylate graft polymer, starch, cross-linked carboxymethylated cellulose, acrylic acid copolymer, hydrolyzed starch-acrylonitrile graft copolymer, starch-acrylic acid graft copolymer, saponified vinyl acetate-acrylic acid ester copolymer, hydrolyzed acrylonitrile copolymer, hydrolyzed acrylamide copolymer, ethylene-maleic anhydride copolymer, isobutylene-maleic anhydride copolymer, polyvinylsulfonic acid, polyvinylphosphonic acid, polyvinyl phosphoric acid, polyvinyl sulfonic acid, sulfonated polystyrene, polyvinylamine, polydialkylaminoalkyl (meth)acrylamide, polyethyleneimine, polyarylamine, polyallylguanidine, polydimethyldialylammonium hydroxide, quaternized polystyrene derivatives, guanidine-modified polystyrene, quaternized poly(meth)acrylamide, and polyvinylguanidine.

7. The heat absorbing pack for the secondary battery module of claim 1, wherein the superabsorbent matrix further includes a thermally conductive filler inside.

8. The heat absorbing pack for the secondary battery module of claim 1, wherein the superabsorbent matrix includes 10 g/g to 500 g/g of water.

9. A secondary battery module comprising:

a housing member;
a plurality of battery cells inserted within the housing member; and
a heat absorbing pack according to claim 1 for absorbing heat generated by the plurality of battery cells.

10. The secondary battery module of claim 9, wherein the plurality of battery cells are arranged in n rows (where n≥2), and the heat absorbing pack is disposed between rows of the plurality of battery cells.

11. The secondary battery module of claim 9, wherein the plurality of battery cells are arranged in n rows (where n≥2), and the heat absorbing pack is disposed in a space between an outer surface of the rows and the housing member.

12. The secondary battery module of claim 9, wherein the heat absorbing pack is inserted such that a surface of the heat absorbing pack is perpendicular to the bottom surface of the secondary battery module, and is disposed such that the venting induction part of the heat absorbing pack is positioned at an upper part of the heat absorbing pack.

[FIG. 1]

10:11,12,13,14,15
30:30a,30b

[FIG. 2]

[FIG. 3]

[FIG. 4]

(A)

30                                                    340

325

(B)

30                                                    340

325

[FIG. 5]

HEAT ABSORBING PACK
OF COMPARATIVE EXAMPLE 2

— · —— · — HEATED SIDE UPPER PART

——— · · · ——— HEATED SIDE CENTER

— · — · — · — · — · HEAT SIDE LOWER PART

— — — — — — — REAR SIDE UPPER PART

——————— REAR SIDE CENTER

— · — · — · — · — REAR SIDE LOWER PART

HEAT ABSORBING PACK
OF EXAMPLE 1

— · —— · — HEATED SIDE UPPER PART

—— · · · —— HEATED SIDE CENTER

— — — — — — — HEAT SIDE LOWER PART

— — — — — — — REAR SIDE UPPER PART

——————— REAR SIDE CENTER

— · — · — · — · — REAR SIDE LOWER PART

[FIG. 6]

HEAT ABSORBING PACK
OF COMPARATIVE EXAMPLE 2

-------- REAR SIDE UPPER PART

———— REAR SIDE CENTER

—·——·—· REAR SIDE LOWER PART

HEAT ABSORBING PACK
OF EXAMPLE 1

-------- REAR SIDE UPPER PART

———— REAR SIDE CENTER

—·——·— REAR SIDE LOWER PART

[FIG. 7]

EXAMPLE 1

[FIG. 8]

COMPARATIVE EXAMPLE 1

[FIG. 9]

COMPARATIVE
EXAMPLE 2

<table>
<tr><td colspan="2" align="center">**INTERNATIONAL SEARCH REPORT**</td><td colspan="2">International application No.<br>**PCT/KR2023/018218**</td></tr>
</table>

**A. CLASSIFICATION OF SUBJECT MATTER**

**H01M 10/659**(2014.01)i; **H01M 10/6551**(2014.01)i; **H01M 10/613**(2014.01)i; **H01M 10/653**(2014.01)i; **H01M 50/682**(2021.01)i; **H01M 50/204**(2021.01)i

According to International Patent Classification (IPC) or to both national classification and IPC

**B. FIELDS SEARCHED**

Minimum documentation searched (classification system followed by classification symbols)

H01M 10/659(2014.01); H01M 10/052(2010.01); H01M 10/058(2010.01); H01M 10/613(2014.01); H01M 10/658(2014.01); H01M 2/02(2006.01); H01M 2/10(2006.01); H01M 2/12(2006.01); H01M 8/04(2006.01); H01M 8/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고흡수성 매트릭스(superabsorbent matrix), 열분산(thermal dispersion), 파우치(pouch), 물(water), 핀홀(pinhole), 흡열(heat absorption), 이차전지 모듈(secondary battery module)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2019-0082974 A (BEIJING KEY POWER TECHNOLOGIES CO., LTD.) 10 July 2019 (2019-07-10)<br>See paragraphs [0030]-[0047] and figures 1-5. | 1-12 |
| Y | KR 10-2018-0048293 A (TOYOTA JIDOSHA KABUSHIKI KAISHA) 10 May 2018 (2018-05-10)<br>See paragraph [0067] and figure 4. | 1-12 |
| Y | JP 2010-153394 A (CASIO COMPUTER CO., LTD.) 08 July 2010 (2010-07-08)<br>See paragraph [0084]. | 5,6 |
| A | JP 2020-170711 A (CADENZA INNOVATION INC.) 15 October 2020 (2020-10-15)<br>See entire document. | 1-12 |
| A | US 2011-0274951 A1 (YASUI, Shunsuke et al.) 10 November 2011 (2011-11-10)<br>See entire document. | 1-12 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **23 February 2024** | **23 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/018218**

| Patent document cited in search report | | | Publication date (day/month/year) | Patent family member(s) | | | Publication date (day/month/year) |
|---|---|---|---|---|---|---|---|
| KR | 10-2019-0082974 | A | 10 July 2019 | CN | 108054460 | A | 18 May 2018 |
| | | | | CN | 108054460 | B | 05 March 2021 |
| | | | | CN | 207587926 | U | 06 July 2018 |
| | | | | EP | 3550662 | A1 | 09 October 2019 |
| | | | | US | 2020-0287252 | A1 | 10 September 2020 |
| | | | | WO | 2018-099396 | A1 | 07 June 2018 |
| KR | 10-2018-0048293 | A | 10 May 2018 | CN | 108011152 | A | 08 May 2018 |
| | | | | CN | 108011152 | B | 16 March 2021 |
| | | | | JP | 2018-073665 | A | 10 May 2018 |
| | | | | JP | 6597558 | B2 | 30 October 2019 |
| | | | | US | 11682803 | B2 | 20 June 2023 |
| | | | | US | 2018-0123196 | A1 | 03 May 2018 |
| JP | 2010-153394 | A | 08 July 2010 | | None | | |
| JP | 2020-170711 | A | 15 October 2020 | AU | 2015-264112 | A1 | 26 November 2015 |
| | | | | AU | 2015-264112 | B2 | 05 December 2019 |
| | | | | CA | 2947765 | A1 | 26 November 2015 |
| | | | | CN | 107078231 | A | 18 August 2017 |
| | | | | CN | 107078364 | A | 18 August 2017 |
| | | | | EP | 3146574 | A1 | 29 March 2017 |
| | | | | EP | 3146581 | A1 | 29 March 2017 |
| | | | | EP | 3146581 | A4 | 21 February 2018 |
| | | | | JP | 2017-523584 | A | 17 August 2017 |
| | | | | JP | 2017-524240 | A | 24 August 2017 |
| | | | | JP | 6723990 | B2 | 15 July 2020 |
| | | | | KR | 10-2017-0005117 | A | 11 January 2017 |
| | | | | KR | 10-2017-0031087 | A | 20 March 2017 |
| | | | | MX | 2016015059 | A | 29 June 2017 |
| | | | | MX | 2016015167 | A | 27 March 2017 |
| | | | | US | 10396416 | B2 | 27 August 2019 |
| | | | | US | 10651521 | B2 | 12 May 2020 |
| | | | | US | 2017-0098806 | A1 | 06 April 2017 |
| | | | | US | 2017-0214103 | A1 | 27 July 2017 |
| | | | | WO | 2015-179597 | A1 | 26 November 2015 |
| | | | | WO | 2015-179625 | A1 | 26 November 2015 |
| US | 2011-0274951 | A1 | 10 November 2011 | CN | 102301503 | A | 28 December 2011 |
| | | | | JP | 4900534 | B2 | 21 March 2012 |
| | | | | WO | 2010-098067 | A1 | 02 September 2010 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220154484

- KR 1020150000725